# EUROPEAN PATENT APPLICATION

(11) **EP 1 909 197 A1**
(43) Date of publication of application: **09.04.2008**
(21) Application number: 07018813.1
(22) Date of filing: 25.09.2007
(51) Int. Cl.: G06F 17/30

(54) **Systems and methods for ranking search engine results**

(30) Priority: 03.10.2006 IT MI20061897
(71) Applicant: Pointer S.R.L., 20132 Milano (IT)
(72) Inventor: Bonzi, Alessandro, 20048 Carate Brianza(MI) (IT); Soldani, Nicolò, 20131 Milano (IT)
(74) Representative: Alagem Modiano, Lara S.

(57) **Abstract**

Systems and methods for ranking search engine results on the basis of a primary score resulting from a primary ranking influence and/or a secondary score resulting from a secondary ranking influence. The primary score and the secondary score rank factors over which a website owner or advertising agency has no effective control, such as user satisfaction, or the number of times a product has been purchased from a website that corresponds to a search result. The search engine results are thus ranked on the basis of the quality of the match between the search results and the search parameters, and are not susceptible to ranking influences due to keyword stuffing or monetary payments.

## Description

The present invention relates generally to ranking search engine results. More specifically, the present invention relates to determining the relative position or degree of value assigned to each of a plurality of search results obtained by a search engine in response to a query from a user.

A search engine is an information retrieval system that searches documents such as the text of web pages for specific keywords, and returns a listing of documents or a link to websites where the keywords were found. Search engines work by matching a query, or request for information, against an index that typically has been created by the search engine. The index is a database that indicates the content of a large number of documents or websites and includes the words (or truncated versions of the words) as well as pointers to the locations of the words in each document. The index is searched for matches with the keywords, and these matches form the results of the search.

A problem arises when there is a large number of search results. Often search engines match keywords with thousands of websites or documents, making the result of the search ineffective. For this reason, search engines have developed ranking capability to rank search engines on the basis of different factors such as the frequency with which the keywords appear in the document, or the location in the document where the keywords appear (for example keywords in the title of a document might be deemed to be more important than keywords appearing near the end of the document). The aim of these ranking systems is to have the most relevant search results indicated at the top of the list of search results, where they are most likely to be visited by the person who entered the keywords. Therefore the search engine results are generally listed from most relevant to least relevant.

However, search engine marketers and promoters can manipulate these results by repeating keywords in their web pages or meta tags. This type of "keyword stuffing" or "spam indexing" can skew search engine results so that an inferior website with misleading or redundant commonly searched keywords could be ranked higher than a quality website with fewer commonly searched keywords. This higher ranking corresponds to a higher profile listing of the website corresponding to that result at or near the top of the list of search results, which increases the likelihood that a searcher will visit that website.

Moreover, some search engines have put the coveted listings at or near the top of the search engine results pages for sale to the highest bidder. Sometimes the website owner can simply buy a top position on a search engine results page. In other cases the search engine partakes in "pay per click" advertising, where the website owners pay a fee to the search engine for each click on their link. In a pay per click scenario, it is in the search engines interest to have a pay per click advertisement prominently displayed near the top of a search engine results page to increase the number of clicks on the link, which increases the fee that the website owner must pay to the search engine.

It follows that listings of search engine results are influenced by several factors that can seriously diminish the objectivity of the search results and can direct a searcher to websites that may not be the most relevant to the searchers query. Search engine results may be manipulated to make a website seem more relevant than it is, or simply may be sold to the highest bidder. In either event this manipulation of search engine result pages causes a listing of results that does not most closely correspond to the users request.

This artificially induced placement of a search result in a more prominent location than it would otherwise be placed compromises the integrity of the search, as a search results list may be based on keyword stuffing or on the payment of a fee, and not based on the order in which websites actually match the search inquiry, the quality of the website, or the ability of the website to provide what a searcher is looking for. A problem thus arises in situations where a searcher wishes to receive search results based only on the merit of the websites themselves, or based on such factors as the level of past success users have had with the websites that form the list of search results.

From the foregoing, it is evident there is a direct need for systems and methods for quality-based ranking of search engine results. To increase efficiency and the accuracy of the search results, factors such as the number of prior conversions (i.e., website visits or product sales) realized by a particular search result are analyzed. Moreover, user feedback regarding specific past conversions may also be solicited and analyzed. Thus, the aim of the present invention is to overcome the above mentioned problems by providing systems and methods related to the quality of the search results by basing them at least in part on the quantity and quality of actual past conversions, as opposed to the excessive use of keywords or the amount an advertiser pays to a search engine.

Within this aim and to satisfy these needs, the present invention features systems and methods for providing a quality based ranking of search engine results. This aim and others are achieved by a method for ranking a plurality of search results, comprising: receiving, by a computer associated with a computer network, search parameters input by a user; performing a search of the computer network for data satisfying the search parameters; evaluating a primary ranking influence to assign a primary score to a plurality of search results; evaluating a secondary ranking influence to assign a secondary score to the plurality of search results; creating a search engine results page comprising the plurality of search results on the basis of the primary score and the secondary score; and displaying the search engine results page where the plurality of search results are ranked on the basis of the primary score and the secondary score.

The above mentioned aim and others are also achieved by a system for ranking a plurality of search results by a computer associated with a computer network, comprising: a processor associated with the computer; a receiver associated with the computer for receiving search parameters input by a user; the processor controlling a search of the computer network for data satisfying the search parameters; the processor evaluating a primary ranking influence to assign a primary score to a plurality of search results; the processor evaluating a secondary ranking influence to assign a secondary score to the plurality of search results; a search engine results page created by the processor comprising the plurality of search results; a monitor associated with the computer displaying the search engine results page where the plurality of search results are ranked on the basis of the primary score and the secondary score.

In certain embodiments, the search results may also include a listing of websites that are displayed to satisfy the search parameters, or may facilitate user access to one of the websites listed as a search result. Moreover, each website may be associated with a merchant who is in the business of selling a good or service. The computer network may be the Internet, and in some situations, user feedback regarding previous user access to one of the websites that appears as a search result may be solicited and/or stored. Search parameters generally include a word listing (i.e., keywords), and factors influencing search results can include past user access to or purchases from a website relevant to the search inquiry, as well as user feedback solicited from the user after visiting or purchasing an item from a past visit to the website relative to the present search inquiry.

The aim and objects of the present invention are achieved by the methods and systems according to independent claim 1 and any other independent claims of this invention. Further details may be found in the remaining dependent claims.

Other aspects and advantages of the present invention will become apparent from the following detailed description, taken in conjunction with the accompanying drawings, illustrating the principles of the invention by way of example only.

The foregoing and other objects, features, and advantages of the present invention, as well as the invention itself, will be more fully understood from the following description of various embodiments, when read together with the accompanying drawings, in which:
Figure 1 is a flow chart illustrating a method for ranking search engine results according to an embodiment of the invention;
Figure 2 is a block diagram illustrating a system for ranking search engine results according to an embodiment of the invention;
Figure 3 is a block diagram illustrating the primary ranking influence according to an embodiment of the invention;
Figure 4 is a block diagram illustrating a secondary ranking influence according to an embodiment of the invention.

As shown in the drawings for the purposes of illustration, the invention may be embodied in systems and methods for ranking search engine results. These rankings are influenced by the quality of the websites associated with the search engine results. Embodiments of the invention allow the rankings to be based on the amount of user activity, such as product sales, that a website associated with the search results has undergone, as well as user feedback regarding past visits to a website.

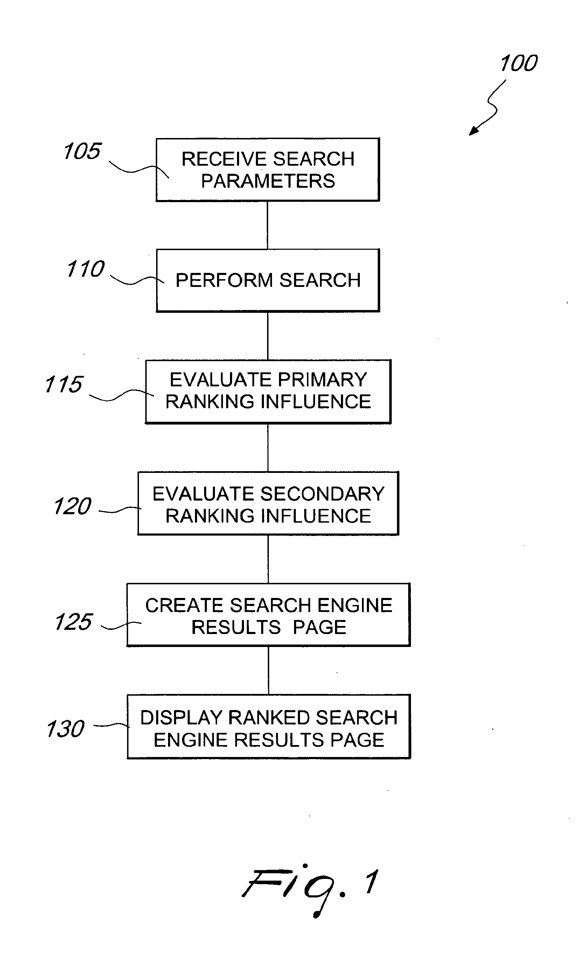

In brief overview, Figure 1 is a flow chart illustrating a method 100 for ranking search engine results according to an embodiment of the invention. Method 100 generally begins by receiving search parameters (STEP 105). Generally the search parameters may be received by or input into any computer that may be associated with a computer network, such as the Internet. Method 100 then proceeds to perform a search on the basis of the search parameters (STEP 110). Performing a search (STEP 110) generally includes matching the search parameters against an index containing data such as the words included in documents on a plurality of websites, as well as pointers to the locations of these words in the documents. The index is typically a database containing information that is collected and stored and subsequently searched. Performing a search (STEP 110) may be carried out by a search engine or any information retrieval system that compares search parameters with data stored in an index, and performing a search (STEP 110) generally includes obtaining search results that correspond to the search parameters. The plurality of search results is generally obtained on the basis of matches between some or all of the search parameters and at least some of the data stored in the index. These search results may include links to websites that contain the data that is stored on the index and that corresponds to the search parameters.

Once search results have been obtained, they must be ranked in the order of their display. It follows that the more relevant search results should receive a better (i.e., higher) ranking than less relevant search results. Therefore, after performing a search, method 100 may proceed to evaluate a primary ranking influence (STEP 115). Generally, evaluating a primary ranking influence (STEP 115) results in assigning a primary score to a plurality of search results. Typically the primary ranking influence includes the number of conversions undertaken by a website that corresponds to a search result. A conversion may include a successful action, such as a purchase by the user who inputs the search parameters or by another user. A conversion may also include the number of visits to a website, or the number of times a particular portion of a website has been accessed, such as a page requiring a secure connection indicating a purchase is likely taking place, or access by a user to a payment page associated with a website that appears as a search result. Each search result may be assigned a primary score, which is a numerical value on the basis of the primary ranking influence, such as the number of past sales of a product through a website that corresponds to a search result.

After evaluating a primary ranking influence (STEP 115), method 100 may proceed to evaluate a secondary ranking influence (STEP 120). The secondary ranking influence may include various forms of user feedback. This may be obtained, for example, by providing the user with a survey when a user visits the search engine for the second time. In this case, the computer may solicit information regarding the user's level of satisfaction with a particular website regarding a recent purchase from that website or any other information indicative of the level of satisfaction of a user or users. This may also include obtaining confirmation of past purchases by the user of a product from a website that corresponds to a search result. Generally, evaluating the secondary ranking influence (STEP 120) results in assigning a secondary score, generally a numerical value, to a plurality of search results. This plurality of search results is typically the same plurality of search results that were evaluated by the primary ranking influence to assign the primary score. It is not necessary in all embodiments for method 100 to always evaluate the first ranking influence (STEP 115) and to evaluate the second ranking influence (STEP 120). In different embodiments, the invention evaluates either or both of the first and second ranking influences, and may assign either or both of a primary score and a secondary score.

Method 100, after evaluating the primary ranking influence (STEP 115), or evaluating the secondary ranking influence (STEP 120) or both, may then proceed to the step of creating the search engine results page (STEP 125). A search engine results page, or SERP, includes a complete listing of search results, ranked in order from most relevant to least relevant with respect to the search parameters. The search engine results page may include a list of websites that are relevant to the search parameters. The search engine results page is created (STEP 125) on the basis at least in part of the primary score and the secondary score. The primary score and the secondary score may be given different weights relative to each other. In some instances, the primary score is given more weight in ranking the search engine results. In other instances the secondary score is more important. These two scores may also be given equal weight. In one embodiment the primary score and the secondary score may be summed to arrive at a total score, where the highest score corresponds to the search result that most closely matched the search parameters, (i.e., the highest ranked search result).

While the mathematical relationship between the primary score and the secondary score relative to each other may vary, the search engine results page is generally created (STEP 125) on the basis of a combination of these two scores. This resulting combination allows the best search engine result to be the one that is most prominently displayed on the search engine results page. Normally, this would appear at or near the top of the page. Generally neither the primary ranking influence nor the secondary ranking influence are themselves influenced by financial motives such as a website owner paying a fee to guarantee a better or higher ranking in the search engine results page.

Once a search engine results page has been created (STEP 125) with listings of the SERP ranked on the basis of an evaluation of the primary (STEP 115) and secondary (STEP 120) ranking influences, method 100 typically proceeds to display the ranked search engine results page (STEP 130). Displaying step (STEP 130) generally includes displaying the ranked search engine results on a computer monitor or similar display device. This may include a display of a list of websites, where each website is a search result that at least partially fulfills or matches the search parameters. Typically the most relevant search results appear at or near the top of the display, or is otherwise prominently displayed. The display may show only a finite number of results and then require the user to take some action, such as click on a link, in order to display the next finite number of results, which generally are of less relevance to the search parameters that those initially displayed.

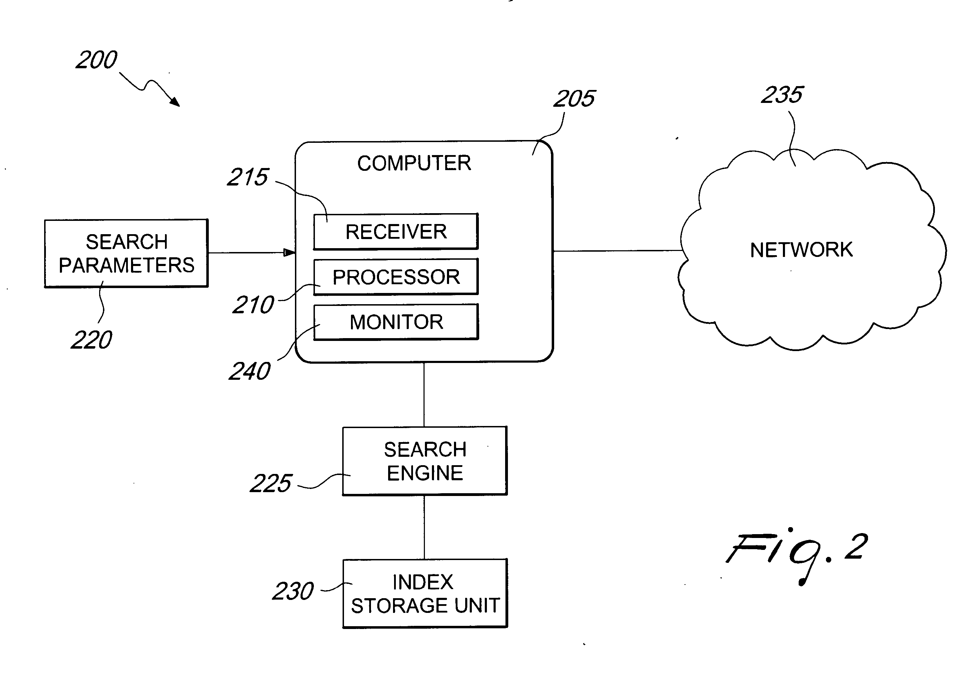

In brief overview, Figure 2 is a block diagram illustrating a system 200 for ranking search engine results according to an embodiment of the invention. System 200 generally includes at least one computer 205. Computer 205 is generally a device such as a programmable electronic machine that performs high-speed mathematical or logical operations or that assembles, stores, correlates, or otherwise processes information. Computer 205 may include any general purpose computer. Computer 205 may include at least one processor 210. Processor 210 may include a central processing unit at least partly responsible for logic operations of computer 205.

Computer 205 also generally includes at least one receiver 215, which is generally capable of accepting signals containing data that are input into computer 205. With respect to the present invention, the data input into computer 205 may include one or a plurality of search parameters 220. Search parameters 220 are typically input into computer 205 by a user, and search parameters 220 are generally one or more words or phrases that define a search, or request for information, that a user wishes to carry out. Search parameters 220 may include one or more keywords, which are generally descriptive words relevant to information a user is seeking. Search parameters 220 may also include portions of words or phrases, truncated words, images, symbols, or other similar strings of characters. Search parameters may be input into computer 205 through a keyboard associated with receiver 215 and computer 205.

System 200 also includes at least one search engine 225. Search engine 225 may be integral to computer 205, or may be otherwise associated with computer 205. Search engine 225 acts as an information retrieval device that matches search parameters 220 against an index that has been previously created. This index may be stored in index storage unit 230, which is a memory unit capable of data storage. Like search engine 225, index storage unit 230 may be integral to or otherwise associated with computer 205.

Search engine 225 may comprise a program that searches documents for specified search parameters 220 and returns a list of documents where search parameters 220 were found. Search engine 225 may be crawler based, human based, or a combination thereof. A crawler based search engine 225 generally scans a network 235, such as the Internet, by sending out "spiders" or "crawlers", which are programs designed to collect or record information on websites associated with network 235, and return that information to a central depository, where the data is indexed. In a human-based embodiment, search engine 225 may rely on humans to submit information regarding the website, and this information is then indexed. Search engine 225 then compares this indexed information with search parameters 220 to create search engine results.

Network 235 may include any network, such as the Internet, a local area network, a wide area network, or any combination thereof. Network 235 may also include more than one network. Moreover, computer 205 may be part of network 235, associated with network 235, or capable of connecting to network 235. Network 235 may encompass all components of system 200.

System 200 also may include a display device such as monitor 240, to display a search engine results page. Each ranked search result may be represented by a link to a website, where the contents of the website is relevant to search parameters 220. The search engine results page generally includes the complete list of search engine results. In some embodiments, only a fraction of the search engine results is initially displayed on monitor 240. In such a case, if a user wishes to access additional search engine results, the user may be required to take affirmative action, such as clicking on a link that appears on monitor 240 in order for some or all of the additional search results to be displayed. Monitor 240 is typically a video display device that accepts signals from computer 205 and displays signals such as the search engine results page on a screen. Monitor 240 may be integral to or otherwise associated with computer 205.

Generally, search engine 225 in conjunction with processor 210 rank the search engine results on the basis of a primary ranking influence and a secondary ranking influence. These ranking influences allow for a quality based ranking of search engine results that is immune to artificial variances introduced by meta tags, keywords, and financial payments to or from advertising agencies. Generally, a primary score and a secondary score are associated with the primary and secondary ranking influences, respectively, and these scores are evaluated to rank the search engine results. Different embodiments of the invention may give different amounts of consideration to the primary and secondary scores when ranking the search engine results. The factors that constitute both the primary ranking influence and the secondary ranking influence will now be described individually.

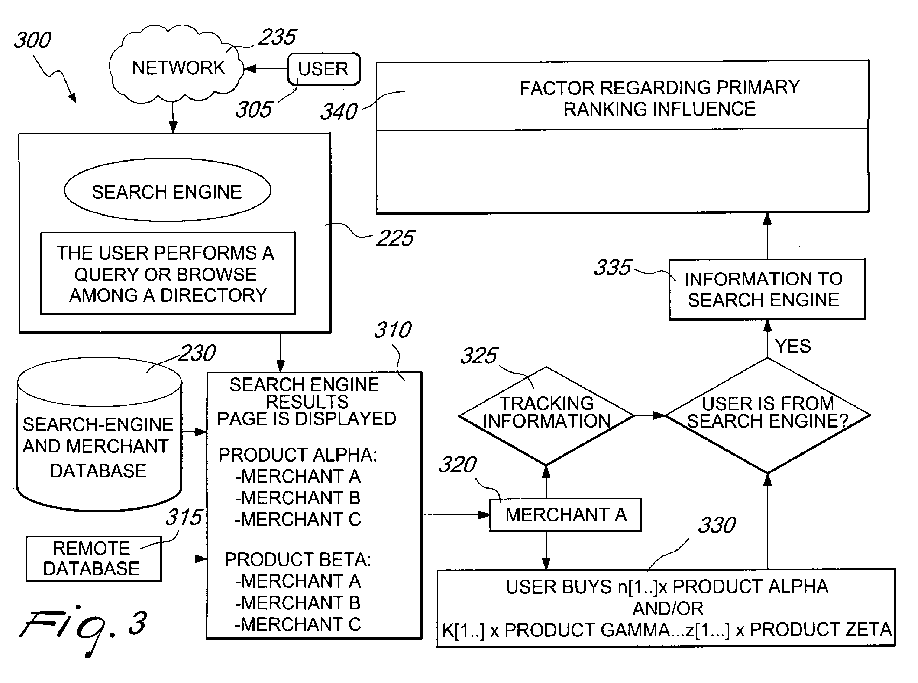

In brief overview, Figure 3 is a block diagram illustrating a system 300 incorporating the primary ranking influence according to an embodiment of the invention. For example, system 300 may represent situations that rank search engine results according to a score on the basis of the number of items sold and on the basis of the feedback of the purchaser. This is generally referred to as a "quality ranking system" where the search engine is enabling a quality approach to the search.

System 300 includes a user 305. User 305 is generally a person who has a request for information, i.e., a person who wishes to make a search to obtain desired information. User 305 may wish to search for a product to buy. User 305 typically has access to network 235, such as the Internet. User 305 also has access to search engine 225, which may include an online facility that allows the user to search or browse among an index (i.e., directory) of categories of products.

System 300 typically includes at least one search engine results page (SERP) 310. Search engine results page 310 may include a list of search engine results, such as links to relevant websites. These websites may be associated with merchants who sell the product or information that user 305 desires, and that is the subject of the search. SERP 310 may include a display of the collection of websites associated with these merchants.

In an embodiment, user 305 may be searching for a specific product or products, and user 305 may be interested in finding a plurality of merchants associated with the sale of these specific products. In such a case, search engine results page 310 may include a list of results associated with a product, "product alpha" and another list of results associated with another product, "product beta". These results may include a list of merchants that offer products alpha or beta as indicated in Figure 3. In this illustrative embodiment, the order in which the merchants appear is dictated by an evaluation of the first and/or second ranking influences as described herein. The search results, which indicate the merchants associated with the sale of the desired products, is typically stored in, or retrieved from, index storage unit 230. Index storage unit 230 may include a database comprising merchant data, such as identifying information like websites associated with the merchants, data regarding their products, and other information. Generally merchant information, merchant product information, and ranking data are stored in index storage unit 230.

In an alternative embodiment the merchant product information can also be accessed by search engine 225 from a remote database 315. This accessing may be accomplished though an Internet Protocol connection, such as a TCP/IP protocol using XML format. Remote database 315 may include at least one merchant server. This allows search engine 225 to search merchant servers directly, which may reduce or eliminate the need to access index storage unit 230.

Search engine results page 310 may include information in addition to merchant and product names. For example search engine results page 310 may include one or more of the following: product title, product description, product price, a user comment link about the product, product photographs.

In an illustrative embodiment, user 305 may click on a link appearing on search engine results page 310 related to product alpha that is sold by a merchant, "Merchant A". Once user 305 clicks on the link, search engine 225 retrieves information necessary to redirect user 305 to Merchant A web page 320 associated with product alpha. Typically, after user 305 visits a Merchant A web page 320, Merchant A installs information 325 on the browser being used by user 305. Generally information 325 is capable of determining that user 305 has visited Merchant web page 320 via search engine 225.

Once user 305 has accessed Merchant A web page 320, for example by clicking on a link appearing on search engine results page 310, user 305 may proceed with one or more purchases 330 of a desired product that was the subject of the search.

In a typical embodiment, once user 305 accesses a payment page of a merchant website (or after user 305 completes payment for a good or service) logic associated with the merchant website typically verifies that user 305 accessed the merchant website via search engine 225 and information 335 is typically sent from merchant A web page 320 to search engine 225. Information 335 may include a URL request in a form decided between a merchant and an owner of search engine 225. Information 335 also generally includes data regarding goods or services, such as a product, purchased by user 305 or otherwise related to a transaction between user 305 and a merchant. Information 335 may include data indicating the price paid for the good or service or other information such as unique merchant identifying information that allows search engine 225 to identify the purchase. Search engine 225 typically receives and stores information 335 and uses it to identify both user 305 and the merchant that participated in the transaction.

Information 335 generally forms the basis of the primary ranking influence. For example, search engine 225 may include a merchant internal score database. Search engine 225 may then add to this database a factor 340 regarding the primary ranking influence, which effects the associated primary score. Factor 340 may be based on purchase 330 as described above. Purchase 330 generally increases the primary score associated with the website from which purchase 330 was made. This increased primary score will typically increase the visibility of the website associated with the merchant on search engine results page 310 when a user (who may be another user different from user 305) searches for the same product. In this way a purchase 330 of a product by user 305 acts as a primary ranking influence that increases a primary score associated with the website from which the purchase was made. This increased score results in an increased ranking for this website and a more prominent display on search engine results page 310 for all subsequent relevant searches. In this illustrative embodiment the search engine results are ranked on the basis of prior successful purchases by user 305. This objective factor improves the quality of the results on search engine results page 310.

In different embodiments, the primary score may form all or part of the score of a particular merchant. The primary score may increase the visibility of a merchant with past successful sales by improving the ranking of that merchant on search engine result page 310 when any user searches for a product associated with that merchant. In a typical embodiments the primary score may be an absolute value on the basis of the number of sold items. This may be represented by the equation where the primary score equals x * (n+k+z) where x = 1 (but x may be a different absolute number such as 0.8 or 0.7 when the effect of this score has to be of less impact versus an entire other group of purchases that are considered less important by the search engine or less interesting by the user), n = the number of purchases of product alpha, k = the number of purchases of product gamma, and z = the number of purchases of product zeta. In order to obtain a ranking value comparable between different types of purchases, n, k and z values may be transformed to relative values comparable one each other before being applied in the formula. For example, a way to get comparable n, k and z values is to use the margin percentage they pay back to the search engine once sold, or the vendor price list as indicated by the merchant. Other values may be assigned to the number of sold items used as a primary ranking influence to determine the primary score. In some instances the highest primary score may correspond to the highest ranking on search engine results page 310. As a result any user searching or browsing for the same product may see search engine results page 310 where the results are ranked at least in part according to sold quantities of the product. This generally has the effect of prioritizing merchants whose websites have registered more sales.

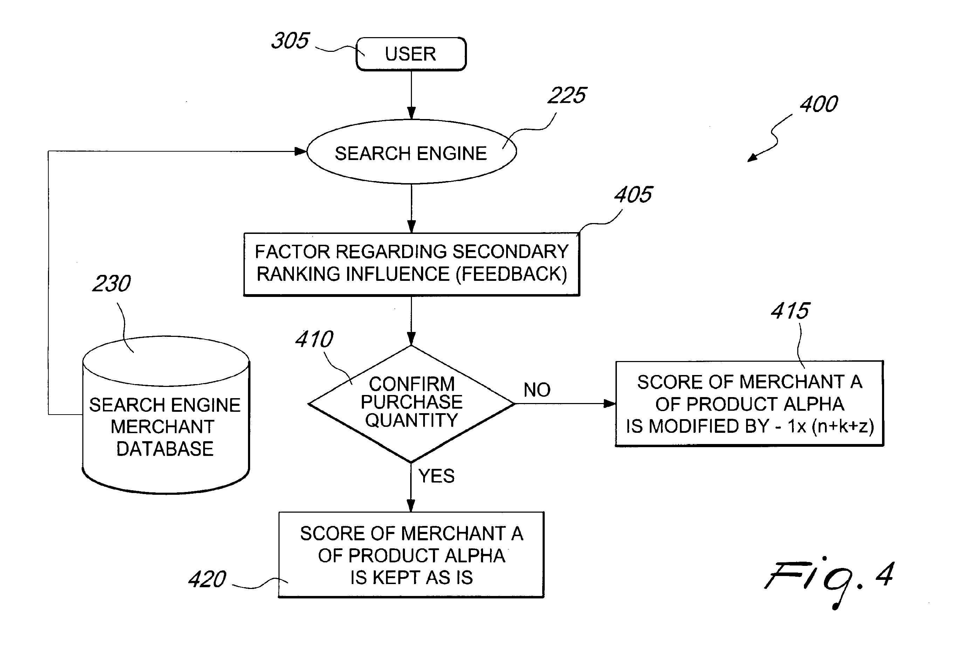

Figure 4 shows how search engine results page 310 may also be influenced by a secondary ranking influence and an associated secondary score. In brief overview, Figure 4 is a block diagram illustrating a system 400 incorporating the secondary ranking influence according to an embodiment of the invention.

For example, the secondary ranking influence may include user feedback from a prior purchase. This user feedback may then be used to determine a secondary score applied to the website associated with the sale side (i.e., the seller) of the prior purchase. For example, when user 305 returns to search engine 225 after user 305 has made a purchase from a website resulting from a previous search, search engine 225 may ask user 305 for feedback 405 regarding the recent purchase. Generally feedback 405 may include a survey or series of questions for user 305 to answer. The response of user 305 may include the user selecting one or more numerical values corresponding to a level of service. For example, user 305 can select a number from 1 to 5 representing the overall quality of service offered on a website where user 305 previously made a purchase, where each number corresponds to a different level of service (i.e., a sliding scale 5 represents outstanding service and 1 represents unacceptable service).

Because user 305 must have previously purchased something from the website, the probability of the same website manipulating the system by providing dishonest information 405 is virtually eliminated. Another way to prevent this type of fraud is for feedback 405 to include a question to user 305 to confirm 410 the quantity of previously purchased items. For example this again may be represented by the equation where the primary score equals x * (n+k+z) where x = 1, n = the number of purchases of product alpha, k = the number of purchases of product gamma, and z = the number of purchases of product zeta. In an embodiment the primary score is not adjusted if user 305 confirms 410 the quantity of previously purchased items.

Other questions that may be included as part of feedback 405 may relate to whether the product was accurately described on the website, shipping, timing, available customer service, ease of use of the website, product description available on the website, or other questions regarding the purchase experience in general. By collecting and analyzing feedback 405 that includes confirmation of the quantity purchased, search engine 225 can confirm the accuracy of the primary score or adjust that score if necessary in the event user 305 indicates a different quantity of goods or services previously purchased.

In addition to making any necessary adjustments to the primary score, the secondary score may be determined by values assigned to other results of feedback 405. For example if user 305 indicates overall service of a website used for a prior purchase was outstanding, then secondary store could be adjusted upwards by any number of points. Similarly, downward adjustments may be made for negative feedback 405 results. Fox example if user 305 confirms that different purchases (that is to say fewer or more purchases or the same purchase but with different prices than what the search engine collected) were actually made than the number of purchases considered in determining the primary score, a downward adjustment may be made to the ranking of that particular search result. This may be represented by the equation where the primary score equals y * (n+k+z) where y = -1 (minus 1 or a different value ranging from -1 to 0 when the downward adjustment has to have a lower impact), n = the number of purchases of product alpha, k = the number of purchases of product gamma, and z = the number of purchases of product zeta, as indicated by reference indicator 415. In this way the secondary score may act as a correcting factor to improve the accuracy of the search engine result rankings by adjusting the primary score on the basis of the results of the secondary score equation. After considering the secondary ranking influence and the secondary score, the primary score of a particular search result may also remain the same 420, such as in a case where user 305 confirms a purchase quantity 410.

Feedback 405 is generally the factor that forms the basis of the secondary ranking influence. A secondary score may be determined on the basis of feedback 405, and this secondary score may influence the order in which search results are displayed on search engine results page 310. In this way feedback 405 regarding past experience of the user 305 purchasing a product from a website located as the result of a prior search acts as a secondary ranking influence represented as a positive or negative secondary score associated with the website from which the purchase was made. This score may adjust the primary score higher or lower, and therefore affects the ranking of search engine results on search engine results page 310. This generally has the effect of prioritizing (i.e., giving a higher ranking to) merchants whose websites have received positive feedback 405.

In the systems and methods of the present invention, the manner in which a website associated with a merchant appears in index storage unit 230 may be irrelevant to any ranking it may have on search engine results page 310. Merchant website data may be supplied to index storage unit 230 as a free content submission or a paid content submission. The systems and methods for ranking search engine results according to the present invention generally are not altered if the merchant pays a fee to have a website eligible for inclusion on search engine results page 310. The present invention ranks the merchants corresponding to search engine results on the basis of the first ranking influence and the second ranking influence, which typically include the number of items previously sold by the website and user feedback about each purchase process. In some embodiments other factors in addition to the first and second ranking influences may be considered when ranking search results.

Generally, the secondary score and the primary score are both numerical values. Typically, these scores are considered in the creation of search engine results page 310 that ranks the search results. In different embodiments the primary score and secondary score may be given differing amounts of influence over the rankings of the search engine results. In some embodiments the secondary score (and thus also the secondary influence) may be minimized so that they have little effect on the primary score and thus also little effect on the overall rankings. In other embodiments the secondary score may be the most significant factor behind the rankings. In still other embodiments there may be no secondary ranking influence and no secondary score. In this case the rankings may be determined solely by the primary ranking influence. Conversely, in an embodiment with no primary ranking influence or primary score, it may be the secondary ranking influence and/or secondary score that determine the rankings of the search engine results. The primary and secondary ranking influences may be weighted equally, or one may be given more weight than the other when search engine results page is created and the associated websites are ranked.

Note that in Figures 1 to 4, the enumerated items are shown as individual elements. In actual implementations of the invention, however, they may be inseparable components of other electronic devices such as a digital computer. Thus, actions described above may be implemented in software that may be embodied in an article of manufacture that includes a program storage medium. The program storage medium includes data signals embodied in one or more carrier wave, a computer disk (magnetic, or optical) (e.g., CD or DVD, or both), non-volatile memory, tape, a system memory, and a computer hard drive.

Generally, the systems and methods for ranking search engine results are based on a primary score resulting from a primary ranking influence and/or a secondary score resulting from a secondary ranking influence. The primary score and the secondary score rank factors over which a website owner or advertising agency has no effective control, such as user satisfaction, or the number of times a product has been purchased from a website that corresponds to a search result. The search engine results are thus ranked on the basis of the quality of the match between the search results and the search parameters, and are not susceptible to ranking influences due to keyword stuffing or monetary payments.

From the foregoing, it will be appreciated that the systems and methods provided by the invention afford a simple and effective way to provide quality based search engine results on the basis of objective parameters. The systems and methods according to embodiments of the invention are able to prevent the artificial manipulation of search engine results. This increases accuracy and efficiency, and prevents diluted or misleading search results from being the first ones presented to a user.

One skilled in the art will realize that the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than the foregoing description, and all changes that come within the meaning and range of equivalency of the claims are therefore intended to be embraced therein.

The disclosures in Italian Patent Application No. MI2006A001897 from which this application claims priority are incorporated herein by reference.

## Claims

1. A method for ranking a plurality of search results, comprising:
receiving, by a computer associated with a computer network, search parameters input by a user;
performing a search of the computer network for data satisfying the search parameters;
evaluating a primary ranking influence to assign a primary score to a plurality search results;
evaluating a secondary ranking influence to assign a secondary score to the plurality of search results;
creating a search engine results page comprising the plurality of search results on the basis of the primary score and the secondary score; and
displaying the search engine results page where the plurality of search results are ranked on the basis of the primary score and the secondary score.

2. The method of claim 1, wherein displaying the search results page comprises displaying a list of a plurality of websites that satisfy the search parameters.

3. The method of claim 2, comprising associating each of the plurality of websites with a merchant.

4. The method of claim 2, further comprising facilitating access by the user to one of the websites associated with one of the plurality of search results.

5. The method of claim 1, comprising storing user feedback on the basis of a purchase made resulting from the user accessing one of the plurality of search results.

6. The method of claim 1, wherein the computer network comprises the Internet.

7. The method of claim 1, wherein receiving search parameters comprises receiving keywords input by the user.

8. The method of claim 1, wherein performing a search of the computer network comprises using a search engine.

9. The method of claim 1, wherein evaluating the primary ranking influence comprises monitoring, by the computer, a total number of a plurality of conversions.

10. The method of claim 9, wherein monitoring the plurality of conversions comprises monitoring a successful action selected from the group consisting of the user accessing one of the plurality of websites, the user accessing a payment page associated with one of the plurality of websites, and the user purchasing an item with the assistance of one of the plurality of websites.

11. The method of claim 3, wherein evaluating the primary ranking influence comprises identifying when the user accesses a payment page associated with a website of the merchant.

12. The method of claim 1, wherein evaluating the primary ranking influence comprises evaluating, by the computer, a number of items previously purchased by the user.

13. The method of claim 1, comprising receiving, by the computer, data regarding a prior purchase made by the user.

14. The method of claim 13, wherein evaluating the secondary ranking influence comprises evaluating the data regarding a prior purchase made by the user.

15. A system for ranking a plurality of search results by a computer associated with a computer network, comprising:
a processor associated with the computer;
a receiver associated with the computer for receiving search parameters input by a user;
the processor controlling a search of the computer network for data satisfying the search parameters;
the processor evaluating a primary ranking influence to assign a primary score to a plurality of search results;
the processor evaluating a secondary ranking influence to assign a secondary score to the plurality of search results;
a search engine results page created by the processor comprising the plurality of search results;
a monitor associated with the computer displaying the search engine results page where the plurality of search results are ranked on the basis of the primary score and the secondary score.

16. The system of claim 15, wherein the search results page comprises a list of a plurality of websites that satisfy the search parameters.

17. The system of claim 16 wherein each of the plurality of websites is associated with a merchant.

18. The system of claim 16, wherein the computer facilitates access by the user to one of the websites associated with one of the plurality of search results.

19. The system of claim 15, wherein the computer stores user feedback on the basis of a purchase made resulting from the user accessing one of the plurality of search results.

20. The system of claim 15, wherein the computer network comprises the Internet.

21. The system of claim 15, wherein the search parameters input by the user comprise keywords.

22. The system of claim 15, wherein the search of the computer network comprises the use of a search engine.

23. The system of claim 15, wherein the primary ranking influence comprises a total number of a plurality of conversions.

24. The system of claim 23, wherein the plurality of conversions comprises at least one of:
the user accessing one of the plurality of websites;
the user accessing a payment page associated with one of the plurality of websites; and
the user purchasing an item with the assistance of one of the plurality of websites.

25. The system of claim 17, wherein the primary ranking influence comprises user access of a payment page associated with a website of the merchant.

26. The system of claim 15, wherein the primary ranking influence comprises a number of items previously purchased by the user.

27. The system of claim 15, wherein the receiver receives data regarding a prior purchase made by the user.

28. The system of claim 27, wherein the secondary ranking influence comprises the data regarding a prior purchase made by the user.

29. An article of manufacture comprising a program storage medium having computer readable program code embodied therein for ranking a plurality of search results by a computer associated with a computer network, the computer readable program code in the article of manufacture comprising:
computer readable code for causing a computer to receive search parameters input by a user;
computer readable code for causing a computer to perform a search of the computer network for data satisfying the search parameters;
computer readable code for causing a computer to evaluate a primary ranking influence to assign a primary score to a plurality search results;
computer readable code for causing a computer to create a search engine results page comprising the plurality of search results on the basis of the primary score and the secondary score; and
computer readable code for causing a computer to display the search engine results page where the plurality of search results are ranked on the basis of the primary score and the secondary score.

30. A system for ranking a plurality of search results by a computer associated with a computer network, comprising:
means for receiving, by a computer associated with a computer network, search parameters input by a user;
means for performing a search of the computer network for data satisfying the search parameters;
means for evaluating a primary ranking influence to assign a primary score to a plurality of search results;
means for evaluating a secondary ranking influence to assign a secondary score to the plurality of search results;
means for creating a search engine results page comprising the plurality of search results on the basis of the primary score and the secondary score; and
means for displaying the search engine results page where the plurality of search results are ranked on the basis of the primary score and the secondary score.
